# EUROPÄISCHE PATENTSCHRIFT

(11) **EP 0 333 022 B1**
(45) Veröffentlichungstag und Bekanntmachung des Hinweises auf die Patenterteilung: **15.06.1994**
(21) Anmeldenummer: 89104155.0
(22) Anmeldetag: 09.03.1989
(51) Int. Cl.: C09K 19/40

(54) **Flüssigkristalline Organopolysiloxane mit chromophoren Seitengruppen**
Liquid crystal organopolysiloxanes with chromophoric lateral groups
Organopolysiloxanes liquides cristallins à groupes latéraux chromophores

(30) Priorität: 14.03.1988 DE 3808430
(43) Veröffentlichungstag der Anmeldung: 20.09.1989
(73) Patentinhaber: Consortium für elektrochemische Industrie GmbH, D-81379 München (DE)
(72) Erfinder: Riepl, Georg, Dr. Dipl.-Chem., D-8261 Emmerting (DE); Kreuzer, Franz-Heinrich, Dr. Dipl.-Chem., D-8033 Martinsried (DE); Miller, Alfred, Dr. Dipl.-Chem., D-8033 Martinsried (DE)

(56) Entgegenhaltungen:
- EP-A- 0 090 282
- EP-A- 0 140 133
- EP-A- 0 260 687

## Beschreibung

Die Erfindung betrifft cholesterisch flüssigkristalline Organopolysiloxane mit chromophoren Seitengruppen.

Als chromophore Gruppen in diesem Sinne sind Gruppen zu verstehen, welche im Wellenlängenbereich von 200 nm bis 800 nm elektromagnetische Strahlung absorbieren.

Cholesterisch flüssigkristalline Organopolysiloxane und deren Herstellung sind u.a. aus US-A 4,410,570 (ausgegeben am 18. Oktober 1983, F.-H. Kreuzer et al., Consortium für elektrochemische Industrie GmbH) bekannt. Nematisch flüssigkristalline Polyacrylate, welche neben mesogenen Gruppen auch chromophore Gruppen in den Seitenketten aufweisen, sind von H. Ringsdorf und H.-W. Schmidt (Makromol. Chem. 187, 1327-1334 (1984) ) beschrieben.

Aufgabe der vorliegenden Erfindung war es, cholesterische organische Polymere, insbesondere Organopolysiloxane bereitzustellen, die besonders einfach orientierbar sind. Ebenso war es Aufgabe der vorliegenden Erfindung, cholesterische organische Polymere, insbesondere Organopolysiloxane, bereitzustellen, deren Orientierung durch Einstrahlung von Licht stellenweise aufgehoben oder verändert werden kann.

Die vorstehend genannten Aufgaben werden durch die Merkmale des Patentanspruchs 1 gelöst.

Die gute Orientierbarkeit von flüssigkristallinen Phasen ist sehr wesentlich für die Verwendbarkeit derartiger Verbindungen. Die Einfachheit, flüssigkristalline Phasen zu orientieren, ist deshalb ein wesentliches Kriterium für die Verwendbarkeit dieser Materialien.

Zumindestens ein Teil dieser Mesogene muss optisch aktiv sein. Der Anteil dieser optisch aktiven Mesogene muß so hoch sein, daß eine cholesterische Phase aufgebaut werden kann.

Vorzugsweise Bedeutet n in den Formeln II und III des Patentanspruchs 1 eine ganze Zahl im Wert von 2, 3 oder 4.

Es ist besonders bevorzugt, daß die erfindungsgemäßen Organopolysiloxane aus Einheiten der Formeln

RₐR''_{c}SiO_{(4-a-c)/2} (VIII),

R'_{b}R''_{c}SiO_{(4-b-c)/2} (IX)

und gegebenenfalls

R''_{c}SiO_{(4-c)/2} (X)

aufgebaut sind, worin R, R', R'', a, b und c die im Patentanspruch 1 für Formel (I) angegebenen Bedeutungen haben.

Als Reste R'' in den oben genannten Formeln (I) bzw. (VIII), (IX) und (X) sind gleiche oder verschiedene Methyl-, Ethyl- oder Phenylreste bevorzugt, insbesondere Methylreste.

Unter die erfindungsgemäßen Organopolysiloxane sind insbesondere im wesentlichen geradkettige Organopolysiloxane zu rechnen, also solche Verbindungen der oben genannten Formeln, für die die Summe a+b+c einen durchschnittlichen Wert von 1,8 bis 2,2 , speziell von 1,9 bis 2,1 besitzt.

Die erfindungsgemäßen Organopolysiloxane besitzen vorzugsweise ein mittleres Molekulargewicht von mindestens 1 200 Atommasseneinheiten.

Die erfindungsgemäßen Organopolysiloxanen lassen sich nach im Prinzip bekannten Verfahren herstellen. So lassen sich insbesondere Organopolysiloxane, welche aus Siloxaneinheiten der Formel (I) aufgebaut sind, dadurch herstellen, daß man Organopolysiloxane mit direkt an Si-Atome gebundenen Wasserstoffatomen, also insbesondere solche der Formel

R''_{c}H_{(a+b)}SiO_{(4-a-b-c)/2} (XI)

mit Verbindungen der Formel 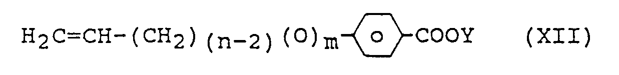
und Verbindungen der Formel

H₂C=CH-(CH₂)₍ₙ₋₂₎(O)ₘ-Z (XIII)

umsetzt.

Vorzugsweise werden etwa a Äquivalente von Verbindungen der Formel (XII) und etwa b Äquivalente von Verbindungen der Formel (XIII) eingesetzt. Es kann jeweils eine Verbindung der Formeln (XII) und (XIII), es können auch mehrere Verbindungen der Formeln (XII) und/oder (XIII) eingesetzt werden. Es kann eine, es können auch mehrere Verbindungen der Formel (XI) eingesetzt werden. Verbindung(en) der Formel (XI) kann bzw. können zuerst mit Verbindung(en) der Formel (XII) und dann mit Verbindung(en) der Formel (XIII) oder umgekehrt umgesetzt werden. Vorzugsweise werden Verbindung(en) der Formeln (XII) und (XIII) in einem Schritt mit Verbindung(en) der Formel (XI) umgesetzt.

Die Bedeutung von n und m in den Formeln (II) und (XII) ist jeweils unabhängig von deren Bedeutung in den Formeln (III) und (XIII).

Die Organo(poly)siloxane der Formel (XI) können geradkettig oder cyclisch sein. Beispiele für Verbindungen der Formel (XI) sind in den Endgruppen, gegebenenfalls auch entlang der Siloxankette direkt an Si-Atome gebundene Wasserstoffatome aufweisende Dimethyl(poly)siloxane, cyclische Siloxane, wie Trimethylcyclotrisiloxan, Tetramethylcyclotetrasiloxan, Pentamethylcyclopentasiloxan und dergleichen mehr. Bevorzugt werden im erfindungsgemäßen Verfahren Cyclosiloxane der Formel [(CH₃)HSiO]ₓ eingesetzt, wobei x eine ganze Zahl im Wert von 3 bis 8 bedeutet.

Die genannten Umsetzungen werden vorteilhafterweise in Gegenwart eines Katalysators durchgeführt. Als Katalysatoren werden vorzugsweise Platinmetalle und/oder deren Verbindungen eingesetzt, vorzugsweise Platin und/oder dessen Verbindungen. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆.6H₂O, Na₂PtCl₄.4H₂O, Platin-Olefin-Komplexe, Platin-Alkohol-Komplexe, Platin-Alkoholat- Komplexe, Platin-Ether-Komplexe, Platin-Aldehyd-Komplexe, Platin-Keton-Komplexe, einschließlich Umsetzungsprodukten aus H₂PtCl₆.6H₂O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß EP-B 110 370.

Katalysatoren der oben genannten Art werden im allgemeinen in Mengen von 1 Gewichts-ppm bis 1000 Gewichts-ppm, jeweils bezogen auf das Gewicht der eingesetzten Verbindung der Formel (XI) verwendet.

Die Umsetzung wird vorzugsweise in einem Lösungsmittel durchgeführt. Beispiele für solche Lösungsmittel sind Kohlenwasserstoffe, wie Pentan, Hexan, Petrolether, Benzol, Toluol und Xylole; halogenierte Kohlenwasserstoffe, wie Dichlormethan, Trichlormethan, Tetrachlormethan, 1,1,1-Trichlorethan, Ethylenchlorid, Perchlorethylen, Dichlordifluormethan und dergleichen mehr. Als Lösungsmittel ist insbesondere Toluol bevorzugt.

Die Umsetzung wird vorzugsweise bei Temperaturen von 0°C bis 200°C, insbesondere von 20°C bis 120°C durchgeführt.

Die Umsetzung kann beim Druck der umgebenden Atmosphäre durchgeführt werden, also ca. 0,1 MPa (abs.). Drücke von 0,09 MPa (abs.) bis 0,11 MPa (abs.) sind bevorzugt.

Die Reaktionszeit hängt u.a. von der Reaktionstemperatur und der Aktivität und der Menge des verwendeten Katalysators ab. Sie liegt im allgemeinen zwischen 20 Minuten und 24 Stunden.

Die erfindungsgemäßen Organopolysiloxane lassen sich auch herstellen, indem man Verbindungen der Formel

RₐR'_{b}R''_{c}SiX_{(4-a-b-c)} (XIV),

wobei in der oben genannten Formel (XIV) X ein Halogenatom, eine C₁- bis C₄-Alkoxygruppe oder eine Hydroxygruppe ist
und R, R',R'',a,b und c die für Formel (I) angegebenen Bedeutungen haben, mit der Maßgabe, daß die Summe a+b+c durchschnittlich einen Wert von 1,5 bis 2,2 annimmt, hydrolysiert.

Die erfindungsgemäßen cholesterisch flüssigkristallinen Organopolysiloxane mit chromophoren Seitengruppen sind leicht orientierbar, d.h. ihre mesogenen Seitengruppen lassen sich leicht gleichartig ausrichten. Im Unterschied zu gängigen polymeren Flüssigkristallen können sie beispielsweise schon durch mechanische Behandlung, wie durch Scherung oder beim Auftragen durch Rakeln orientiert werden. Selbstverständlich lassen sie sich auch durch gängige Methoden, wie durch Oberflächeneffekte, elektrische bzw. magnetische Felder ausrichten. Ein besonderer Vorteil der erfindungsgemäßen Organopolysiloxane gegenüber anderen Flüssigkristallen ist, daß sie nach ihrer Orientierung durch Einstrahlung von Licht in ihrer Orientierung verändert werden können. So kann beispielsweise der Brechungsindex der orientierten Flüssigkristallschicht durch Bestrahlung mit Licht verändert werden. Unter Licht ist in diesem Sinne vorzugsweise elektromagnetische Strahlung in einem Wellenlängenbereich von 200 nm bis 800 nm zu verstehen, also auch ultraviolettes Licht. Diese Umorientierung wird jeweils lediglich auf derjenigen Fläche bewirkt, welche vom Licht bestrahlt wurde. Die erfindinngsgemäßen Organopolysiloxane können also vollständig, sie können aber auch auf kleinsten Teilflächen umorientiert werden. Durch Umorientierung in kleinsten Bereichen ist es möglich, die erfindinngsgemäßen Organopolysiloxane als Bestandteile von löschbaren Informationsspeichern und als Informationsträgermaterial einzusetzen. Selbstverständlich können die erfindinngsgemäßen Organopolysiloxane für alle Zwecke verwendet werden, für die auch bisher cholesterische Flüssigkristalle eingesetzt wurden.

In den nachstehenden Beispielen beziehen sich alle Mengenangaben, falls nicht anders angegeben, auf das Gewicht. Temperaturen und Drücke betragen, falls aus dem Zusammenhang nichts anderes hervorgeht, ca. 23°C bzw. 0,1 MPa (abs.). Die Glastemperaturen und Klärpunkte der erfindungsgemäßen Produkte wurden jeweils durch differentielle Thermoanalyse (DTA) bestimmt.

### Beispiel 1 :

Zu einer Lösung von 13,0 g 4-Propen-2-oxy-benzoesäure-4′-phenylphenylester, 10,9 g 4-Propen-2-oxy-benzoesäure-cholesterylester, 2,3 g 4-(4-Propen-2-oxy-benzylidenamino-)azobenzol und 4,0 g Tetramethylcyclotetrasiloxan in 70 ml Toluol wurden 0,5 ml einer 1 Gew.-%igen Lösung von Dicyclopentadien-Platin-dichlorid in Dichlormethan zugegeben und die so erhaltene Mischung 5 h lang unter Rückfluß erhitzt. Zur Abtrennung von platinhaltigen feinen Niederschlägen wurde über eine kurze, mit Kieselgel befüllte Säule abfiltriert. Anschließend wurde das Lösungsmittel bei vermindertem Druck abdestilliert und der Rückstand mehrmals aus Ethanol umkristallisiert und bei vermindertem Druck bei 60°C getrocknet. Erhalten wurden 21,3 g eines Produktes mit einer Glastemperatur von 50°C, welches bis zum Klärpunkt von 192°C eine cholesterische Phase besitzt. Das Produkt weist im orientierten Zustand eine Reflexionsmaximum bei 750 nm auf, während die Absorptionsbande der chromophoren Gruppe bei 396 nm liegt.
Eine orientierte Schicht des Produkts auf Papier wurde dadurch erhalten, daß man das Papier über eine beheizte Fläche zog und das bis nahe dem Klärpunkt erhitzte Produkt durch ein quer zur Zugrichtung stehendes Rakel in einer 0,005mm bis 0,2 mm dicken Schicht auftrug. Die Orientierung der flüssigkristallinen Schicht ist an dem Auftreten der für solche Flüssigkristalle typischen Reflexionsfarbe zu erkennen.

### Beispiel 2 :

Zu einer Lösung von 50,0 g 4-Propen-2-oxy-benzoesäure-4'-phenylphenylester, 74,6 g 4-Propen-2-oxy-benzoesäure-cholesterylester, 3,6 g 4-(4-Propen-2-oxy-)azobenzol und 18,1 g eines Polymethylhydrogensiloxans einer Viskosität von 24 mPa.s bei 25°C in 350 ml Toluol wurden 2,5 ml einer 1 Gew.-%igen Lösung von Dicyclopentadien-Platin-dichlorid in Dichlormethan gegeben und die so erhaltene Mischung 5 h lang unter Rückfluß erhitzt. Anschließend wurde das Lösungsmittel bei 60°C und vermindertem Druck abdestilliert und das Produkt wie in Beispiel 1 beschrieben isoliert und gereinigt. Erhalten wurden 121,3 g eines Produktes mit einer Glastemperatur von 56°C, welches bis 164°C in einer smektischen Phase vorliegt, oberhalb dieser Temperatur cholesterisch ist und einen Klärpunkt von 224°C aufweist. Das Produkt ist im cholesterischen Zustand leicht durch Scherung orientierbar und hat im orientierten Zustand ein Reflexionsmaximum von 680 nm. Bei rascher Abkühlung unter die Glastemperatur erhielt man eine metastabile cholesterische Phase.

## Patentansprüche

1. Cholesterisch flüssigkristalline Organopolysiloxane, die in den Seitengruppen sowohl Mesogene enthalten, welche zumindestens teilweise optisch aktiv sind, als auch chromophore Gruppen aufweisen, und wobei die Organopolysiloxane aus Einheiten der Formel RₐR'_{b}R''_{c}SiO_{(4-a-b-c)/2} (I) aufgebaut sind, wobei in der oben genannten Formel
**R** gleiche oder verschiedene, einwertige Reste der Formel 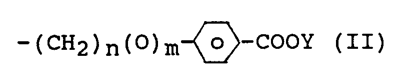 bedeuten, worin
**n** eine ganze Zahl im Wert von 2 bis 12,
**m** eine ganze Zahl im Wert von 0 oder 1 und
**Y** entweder einen gleichen oder verschiedenen Phenylrest, welcher in para-Position durch einen Halogen-, Cyano-, C₁- bis C₈-Alkoxy-, Phenyl-, Phenoxy- oder Cyclohexylrest substituiert ist oder einen Cholesteryl-, 4-Cyclohexyl-cyclohexyl- oder Pinan-10-yl-Rest bedeutet;
**R'** gleiche oder verschiedene, einwertige Reste der Formel -(CH₂)ₙ(O)ₘ-Z (III) bedeuten, worin n und m die oben genannte Bedeutung haben und
**Z** ein Rest der Formeln 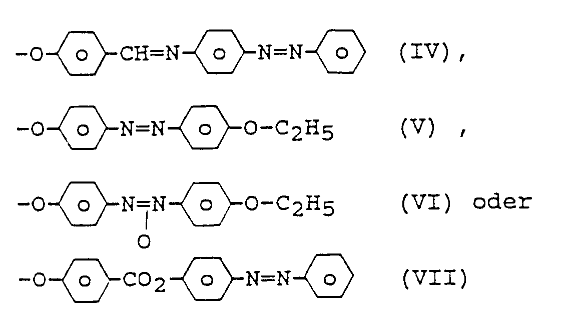 ist;
**R''** gleiche oder verschiedene C₁- bis C₈-Alkylreste oder Phenylreste bedeuten, welche gegebenenfalls durch Halogenatome substituiert sein können, und **a**, **b** und **c** jeweils ganze Zahlen im Wert von 0 bis 3, mit der Maßgabe, daß die Summe von a, b und c maximal 3 beträgt und durchschnittlich jedes Organopolysiloxanmolekül mindestens je eine Einheit der Formel (I) besitzt, für die a mindestens den Wert 1 sowie je eine, für die b mindestens den Wert 1 besitzt, aufweist.

2. Organopolysiloxane gemäß Anspruch 1, welche aus Einheiten der Formeln
RₐR''_{c}SiO_{(4-a-c)/2} (VIII),
R'_{b}R''_{c}SiO_{(4-b-c)/2} (IX)
und gegebenenfalls
R''_{c}SiO_{(4-c)/2} (X)
aufgebaut sind,
worin R, R', R'', a, b und c die in Anspruch 3 angegebenen Bedeutungen haben.

3. Organopolysiloxane gemäß Anspruch 1 oder 2, wobei in den obigen Formeln (I) bzw. (VIII), (IX) und (X) **R''** gleiche oder verschiedene Methyl-,Ethyl- oder Phenylreste sind und die Summe **a+b+c** in diesen Formeln jeweils einen durchschnittlichen Wert von 1,8 bis 2,2 besitzt.

4. Organopolysiloxane gemäß einem der Ansprüche 1, 2, oder 3, welche ein mittleres Molekulargewicht von mindestens 1 200 besitzen.

5. Verfahren zur Herstellung von Organopolysiloxanen gemäß Anspruch 1, in dem Organopolysiloxane der Formel
R''_{c}H_{(a+b)}SiO_{(4-a-b-c)/2} (XI)
mit Verbindungen der Formel 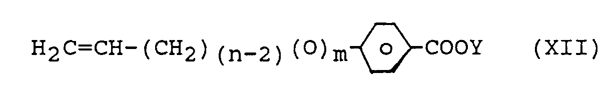 und Verbindungen der Formel
H₂C=CH-(CH₂)₍ₙ₋₂₎(O)ₘ-Z (XIII),
wobei in den obigen Formeln R'', a, b, c, n, m, Y und Z die in Anspruch 1 angegebenen Bedeutungen haben, in Gegenwart von Platinmetallen und/oder deren Verbindungen umgesetzt werden.

6. Verfahren zur Herstellung von Organopolysiloxanen gemäß Anspruch 1, indem Verbindungen der Formel
RₐR'_{b}R''_{c}SiX_{(4-a-b-c)} (XIV),
wobei in der oben genannten Formel (XIV) X ein Halogenatom, eine C₁- bis C₄-Alkoxygruppe oder eine Hydroxygruppe
und R, R', R'', a, b und c die in Anspruch 1 angegebenen Bedeutungen haben, mit der Maßgabe, daß die Summe a+b+c durchschnittlich einen Wert von 1,5 bis 2,2 annimmt, hydrolysiert werden.

7. Informationsspeicher, enthaltend Organopolysiloxane gemaß einem der Ansprüche 1, 2, 3, oder 4.

## Claims

1. Cholesterically liquid-crystalline organopolysiloxanes, which contain, in the side groups, both mesogens, at least some of which are optically active, and chromophoric groups and where the organopolysiloxanes are built up from units of the formula
RₐR'_{b}R''_{c}SiO_{(4-a-b-c)/2} (I) where, in the abovementioned formula,
R denotes identical or different monovalent radicals of the formula 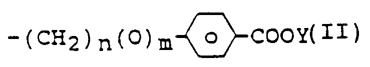 in which
**n** denotes an integer having the value 2 to 12,
**m** denotes an integer having the value 0 or 1, and
**Y** denotes either identical or different phenyl radicals which are substituted in the paraposition by a halogen, cyano, C₁- to C₈-alkoxy, phenyl, phenoxy or cyclohexyl radical or denotes a cholesteryl, 4-cyclohexyl-cyclohexyl or pinan-10-yl radical;
**R'** denotes identical or different monovalent radicals of the formula -(CH₂)ₙ(O)ₘ-Z (III) in which n and m are as defined above and
**Z** is a radical of the formula 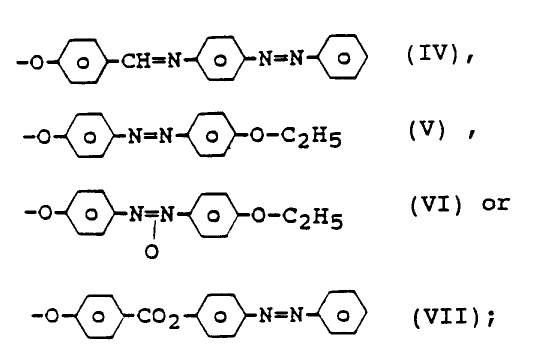 **R''** denotes identical or different C₁- to C₈-alkyl radicals or phenyl radicals, which may optionally be substituted by halogen atoms, and **a**, **b** and **c** in each case denote integers having the value 0 to 3, with the proviso that the sum of a, b and c is a maximum of 3 and, on average, each organopolysiloxane molecule contains at least one unit of the formula (I) for which a has at least the value 1 and one for which b has at least the value 1.

2. Organopolysiloxanes according to Claim 1, which are built up from units of the formulae
RₐR''_{c}SiO_{(4-a-c)/2} (VIII),
R'_{b}R''_{c}SiO_{(4-b-c)/2} (IX)
and optionally
R''_{c}SiO_{(4-c)/2} (X)
in which R, R', R'', a, b and c are as defined in Claim 3.

3. Organopolysiloxanes according to Claim 1 or 2, where, in the above formulae (I) and (VIII), (IX) and (X),
**R''** are identical or different methyl, ethyl or phenyl radicals, and the sum **a+b+c** in these formulae in each case has an average value of from 1.8 to 2.2.

4. Organopolysiloxanes according to one of Claims 1, 2 or 3, which have a mean molecular weight of at least 1,200.

5. Process for the preparation of organopolysiloxanes according to Claim 1, in which organopolysiloxanes of the formula
R''_{c}H_{(a+b)}SiO_{(4-a-b-c)/2} (XI)
are reacted with a compound of the formula 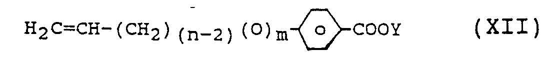 and a compound of the formula
H₂C=CH-(CH₂)₍ₙ₋₂₎(O)ₘ-Z (XIII),
where, in the above formulae, R'', a, b, c, n, m, Y and Z are as defined in Claim 1, in the presence of a platinum metal and/or a compound thereof.

6. Process for the preparation of organopolysiloxanes according to Claim 1, in which compounds of the formula
RₐR'_{b}R''_{c}SiX_{(4-a-b-c)} (XIV),
where, in the abovementioned formula (XIV), X [lacuna] a halogen atom, a C₁- to C₄-alkoxy group or a hydroxyl group,
and R, R', R'', a, b and c are as defined in Claim 1, with the proviso that the sum a + b + c on average adopts a value of from 1.5 to 2.2, are hydrolyzed.

7. Information store containing organopolysiloxanes according to one of Claims 1, 2, 3 or 4.

## Revendications

1. Polyorganosiloxanes mésomorphes cholestériques contenant dans leurs chaînes latérales tant des mésogènes, qui au moins partiellement sont optiquement actifs, que des groupes chromophores, les polyorganosiloxanes étant constitués de motifs de formule
RₐR'_{b}R''_{c}SiO_{(4-a-b-c)/2} (I)
où, dans les formules ci-dessus :
R représente des radicaux monovalents identiques ou différents de formule 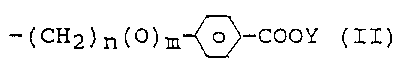 dans laquelle n est un nombre entier de 2 à 12,
m est un nombre entier valant 0 ou 1, et
Y est un radical phényle identique ou différent, qui en position para est substitué par un radical halogéno, cyano, alcoxy en C₁ à C₈, phényle, phénoxy ou cyclohexyle, ou encore représente un radical cholestéryle, 4-cyclohexyl-cyclohexyle ou pinane-10-yle ;
R' représente des radicaux monovalents identiques ou différents de formule
-(CH₂)ₙ(O)ₘ-Z (III)
où n et m ont les significations données ci-dessus, et
Z est un radical de formules 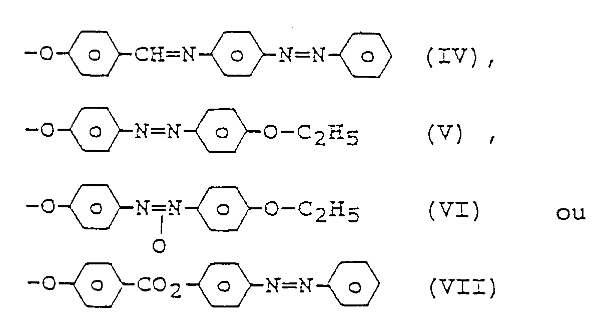 R'' représente des radicaux alkyle en C₁ à C₈ identiques ou différents ou des radicaux phényle, qui éventuellement peuvent être substitués par des atomes d'halogène, et a, b et c sont chacun des nombres entiers valant de 0 à 3, du moment que la somme de a, de b et de c vaut au maximum 3, chaque molécule de polyorganosiloxane possédant en moyenne au moins un motif de formule (I), dans lequel a vaut au moins 1, chaque molécule de polyorganosiloxane comportant aussi un tel motif pour lequel b vaut au moins 1.

2. Polyorganosiloxanes selon la revendication 1, qui sont constitués de motifs de formules
RₐR''_{c}SiO_{(4-a-c)/2} (VIII),
R'_{b}R''-_{c}SiO_{(4-b-c)/2} (IX)
et éventuellement
R''_{c}SiO_{(4-c)/2} (X)
où R, R', R'', a, b et c ont les significations données dans la revendication 3.

3. Polyorganosiloxanes selon les revendications 1 ou 2, pour lesquels, dans les formules (I) ou (VIII), (IX) et (X) ci-dessus, R'' désigne des radicaux méthyle, éthyle ou phényle identiques ou différents, et la somme a+b+c, dans ces formules, vaut dans tous les cas en moyenne de 1,8 à 2,2.

4. Polyorganosiloxanes selon l'une des revendications 1, 2 ou 3, qui ont une masse moléculaire moyenne d'au moins 1200.

5. Procédé pour préparer des polyorganosiloxanes selon la revendication 1, dans lequel on fait réagir des polyorganosiloxanes de formule
R''_{c}H_{(a+b)}SiO_{(4-a-b-c)/2} (XI)
avec des composés de formule 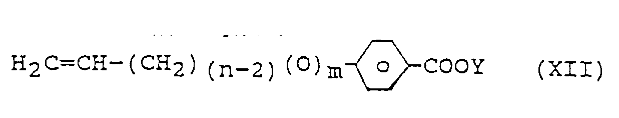 et des composés de formule
H₂C=CH-(CH₂)₍ₙ₋₂₎(O)ₘ-Z (XIII)
où, dans les formules ci-dessus, R'', a, b, c, n, m, Y et Z ont les significations données dans la revendication 1, en présence de métaux du groupe du platine et/ou de leurs composés.

6. Procédé pour préparer des polyorganosiloxanes selon la revendication 1, caractérisé en ce qu'on hydrolyse des composés de formule
RₐR'_{b}R''_{c}SiX_{(4-a-b-c)} (XIV)
où, dans la formule (XIV) ci-dessus, X est un atome d'halogène, un groupe alcoxy en C₁ à C₄ ou un groupe hydroxy, et R, R', R'', a, b et c ont les significations données dans la revendication 1, du moment que la somme a+b+c vaut en moyenne de 1,5 à 2,2.

7. Mémoire d'informations contenant des polyorganosiloxanes selon l'une des revendications 1, 2, 3 ou 4.
